# FASCICULE DE BREVET EUROPEEN

(11) **EP 1 300 335 B1**
(45) Date de publication et mention de la délivrance du brevet: **02.03.2005**
(21) Numéro de dépôt: 02291941.9
(22) Date de dépôt: 01.08.2002
(51) Int. Cl.: B64C 7/00, F16J 15/00

(54) **Aéronef à carénage ventral**
Flugzeug mit Flügel-Rumpf-Verkleidungsdichtung
Aircraft with belly fairing seal

(30) Priorité: 05.10.2001 FR 0112829
(43) Date de publication de la demande: 09.04.2003
(73) Titulaire: AIRBUS FRANCE, 31060 Toulouse (FR)
(72) Inventeur: Maury, Jean-Pierre, 31480 Pelleport (FR); Milhau, Alain, 31270 Frouzins (FR); Pauly, Bernard, 31700 Blagnac (FR)
(74) Mandataire: Bonnetat, Christian

(56) Documents cités:
- EP-A- 1 273 512
- DE-C- 694 021
- DE-C- 4 443 525
- DE-U- 29 713 153
- FR-A- 2 569 455
- FR-A- 2 789 144
- FR-A- 2 793 538
- US-A- 3 756 529
- US-A- 4 034 939
- US-A- 5 114 162

## Description

La présente invention concerne un aéronef à carénage ventral.

On sait que certains aéronefs, pourvus d'un fuselage et d'une voilure fixe comprenant deux ailes opposées par rapport audit fuselage, comportent un carénage ventral, généralement saillant, en forme de berceau, qui est fixé à la partie inférieure dudit fuselage au croisement de ce dernier avec ladite voilure pour obturer la case du train d'atterrissage en en augmentant éventuellement le volume vers le bas, et qui possède deux rebords longitudinaux remontant latéralement le long dudit fuselage, lesdits rebords étant pourvus, chacun, d'une ouverture pour le passage de l'aile correspondante. Un tel carénage complète le profil aérodynamique de la zone de croisement et sa forme est adaptée pour minimiser la traînée aérodynamique qu'il engendre.

Dans certains aéronefs connus, le mode de fixation de ce carénage ventral sur le fuselage entraîne la formation d'une première fente périphérique autour du carénage ventral, entre celui-ci et le fuselage, et d'une seconde fente périphérique autour de chaque aile, entre celle-ci et la périphérie de l'ouverture correspondante dudit carénage. Afin d'obturer lesdites fentes, on prévoit alors un joint allongé, fixé à la périphérie dudit carénage ventral et à la périphérie de chaque ouverture de ce dernier.

On remarquera que, en plus de sa fonction d'étanchéité, ledit joint doit assurer la continuité des surfaces pour éviter l'apparition d'une traînée importante et absorber les mouvements relatifs entre ledit carénage, d'une part, et la voilure et le fuselage, d'autre part.

Pour ce faire, les joints actuellement utilisés comportent deux lèves élastiques longitudinales aptes à s'appliquer, par la face interne de leur extrémité libre, respectivement contre le fuselage ou la voilure, l'une de ces lèvres --désignée ci-après par lèvre d'extrémité-- formant le bord d'extrémité libre dudit joint, tandis que l'autre --désignée ci-après par lèvre interne-- est portée par la face interne de ce joint et est disposée en retrait par rapport à ladite lèvre d'extrémité.

Le document FR-A-2 789 144 représente cet état de la technique.

Un tel joint connu présente de nombreux inconvénients. Tout d'abord, lors de son montage, la lèvre interne --qui est cachée par le joint lui-même et/ou par le carénage-- peut se retourner, sa face externe venant en appui sur le fuselage ou la voilure à la place de sa face interne. Dans ce cas, le joint ne peut plus remplir sa fonction et il s'use très rapidement.

Par ailleurs, en vol, à cause de la différence de pression régnant entre l'intrados (surpression) et l'extrados (dépression) de la voilure, il s'établit, entre l'intrados et l'extrados de chaque aile, une circulation d'air à l'intérieur du carénage à travers lesdites première et seconde fentes, ce qui provoque, notamment du côté de l'extrados, le décollement de l'extrémité libre desdites lèvres élastiques dudit joint, par rapport au fuselage ou à la voilure. Par suite, lesdites lèvres élastiques du joint se mettent à vibrer, et ceci dans une gamme de fréquences parfaitement audible depuis l'intérieur de la cabine, ce qui s'avère gênant pour les passagers. Ces vibrations se transmettent au fuselage et aux éléments qu'il comporte (plancher, support, ...) et provoquent une sollicitation structurale en fatigue desdits éléments. De plus, les vibrations, associées aux efforts aérodynamiques appliqués auxdites lèvres, entraînent une fatigue prématurée de ces dernières, ce qui se traduit par une usure rapide pouvant aller jusqu'à leur déchirure. Enfin, il résulte de ces vibrations l'apparition d'une traînée aérodynamique parasite.

La présente invention a pour objet de remédier à ces inconvénients.

A cette fin, l'invention propose un aménagement selon la revendication indépendante.

Ainsi, grâce à la présente invention, on obtient de nombreux avantages :
- le bourrelet radialement élastique, porté par la face interne du joint, se présente toujours de façon correcte par rapport au fuselage, lors de la pose, ne pouvant se retourner, comme le faisait la lèvre interne, qu'il remplace ; et
- le bourrelet radialement élastique, lorsqu'il est appliqué contre le fuselage de l'aéronef, se déforme et s'aplatit en formant une large surface d'appui, incapable de vibrer comme le faisait ladite lèvre interne. De plus, cette large surface d'appui assure une excellente étanchéité, de sorte que le décollement et l'entrée en vibration de l'extrémité libre de la lèvre d'extrémité sont sinon complètement supprimés, du moins fortement réduits.

Pour réduire encore plus, et même éliminer complètement les vibrations de ladite lèvre d'extrémité, il est avantageux, conformément à une autre particularité de la présente invention, rendue possible du fait de l'excellente étanchéité procurée par ledit bourrelet radialement élastique, que ladite face interne de l'extrémité libre de ladite lèvre d'extrémité comporte, au moins sur une partie dudit joint, au moins un bossage de butée, apte à maintenir ladite lèvre d'extrémité localement écartée dudit fuselage, pour ménager une fuite d'air contrôlée de l'air susceptible de passer à travers les fentes, dans le cas d'un éventuel défaut d'étanchéité, occasionnel et/ou momentané, dudit bourrelet.

Bien entendu, la hauteur de chaque bossage et le nombre desdits bossages, ainsi que la répartition de ceux-ci, sont déterminés, par calcul ou par expérience, pour que le débit d'air de fuite entre lesdits bossages engendre peu de traînée parasite, tout en assurant un faible niveau de vibrations de ladite lèvre d'extrémité du joint.

Selon la géométrie du fuselage de la voilure et du carénage ventral de l'aéronef, le coefficient de pression du côté de certaines parties de l'extrados des ailes peut être très négatif, ce qui est représentatif d'une forte dépression, de sorte que les éventuelles vibrations de l'extrémité libre de la lèvre élastique d'extrémité pourraient, à ces emplacements, avoir une grande amplitude. Il est donc avantageux d'appliquer le joint conforme à la présente invention au moins en regard desdites parties d'extrados auxquelles la valeur du coefficient de pression est fortement négative.

Pour, à la fois, assurer une bonne présentation dudit bourrelet radialement élastique lors de la pose du joint et une bonne étanchéité dudit bourrelet après pose, il est préférable que la raideur dudit bourrelet radialement élastique soit plus grande du côté de la face interne dudit joint que du côté de la partie libre dudit bourrelet qui s'applique contre ledit fuselage ou la voilure.

A cet effet, notamment, il est avantageux que ledit bourrelet radialement élastique soit tubulaire. Dans ce cas, afin d'assurer un appui correct dudit bourrelet contre le fuselage ou la voilure, il peut être avantageux que les deux parties latérales dudit bourrelet tubulaire, joignant respectivement la face interne dudit joint à la partie libre dudit bourrelet qui s'applique contre ledit fuselage, présentent des raideurs différentes.

De telles variations de raideur peuvent être obtenues par des variations de matière constitutive ou par des variations d'épaisseur de la paroi dudit bourrelet tubulaire, ces variations d'épaisseur pouvant elles-mêmes résulter de l'excentration et/ou de l'ovalisation mutuelles du passage interne du bourrelet tubulaire par rapport à la paroi de celui-ci.

Dans un premier mode de réalisation, le joint comporte une partie longitudinale plate fixée audit carénage ventral et cette partie longitudinale plate de fixation est disposée à l'extrémité dudit joint opposée à ladite lèvre élastique longitudinale d'extrémité, ledit bourrelet radialement élastique se trouvant en position intermédiaire entre ladite lèvre élastique longitudinale d'extrémité et ladite partie longitudinale plate de fixation.

En variante, selon un deuxième mode de réalisation, le joint conforme à la présente invention comporte également une partie longitudinale plate fixée audit carénage ventral, mais cette partie longitudinale plate de fixation est disposée en position intermédiaire entre ladite lèvre élastique longitudinale d'extrémité et ledit bourrelet radialement élastique.

Quel que soit son mode de réalisation, il est avantageux que le joint comporte un évidement longitudinal en forme de lame, pratiqué dans la face externe de ladite partie longitudinale plate de fixation et servant de logement au bord périphérique correspondant dudit carénage ventral.

De préférence, le joint de l'invention est réalisé, par extrusion ou par moulage, sous la forme d'un profilé ou d'une boucle fermée monolithique, par exemple en un élastomère armé de fibres.

Les figures du dessin annexé feront bien comprendre comment l'invention peut être réalisée. Sur ces figures, des références identiques désignent des éléments semblables.
La figure 1 est une vue schématique en perspective du dessous d'un aéronef pourvu d'un carénage ventral.
La figure 2 est une vue schématique en perspective du dessus dudit carénage ventral, séparé dudit aéronef et épuré des éléments internes qui le composent.
La figure 3 est une vue latérale schématique, à plus grande échelle, du carénage ventral monté sur l'aéronef et traversé par une aile, avant mise en place du joint conforme à la présente invention.
La figure 4 est une vue en coupe schématique partielle agrandie selon la ligne IV-IV de la figure 3, avant mise en place du joint.
Les figures 5 à 9 illustrent, en coupe transversale schématique agrandie, cinq exemples de réalisation du joint.
La figure 10 représente, en coupe transversale schématique agrandie, le joint de la figure 6, installé sur le carénage ventral pour obturer la fente entre celui-ci et une aile de l'aéronef.
La figure 11 représente, en coupe transversale schématique agrandie, le joint de la figure 7, installé sur le carénage ventral pour obturer la fente entre celui-ci et le fuselage de l'aéronef.
La figure 12 représente en perspective du dessus le joint montré par les figures 6 et 10, mais non encore fixé sur le carénage ventral.
La figure 13 correspond à une vue de face selon la flèche XIII de la figure 10.

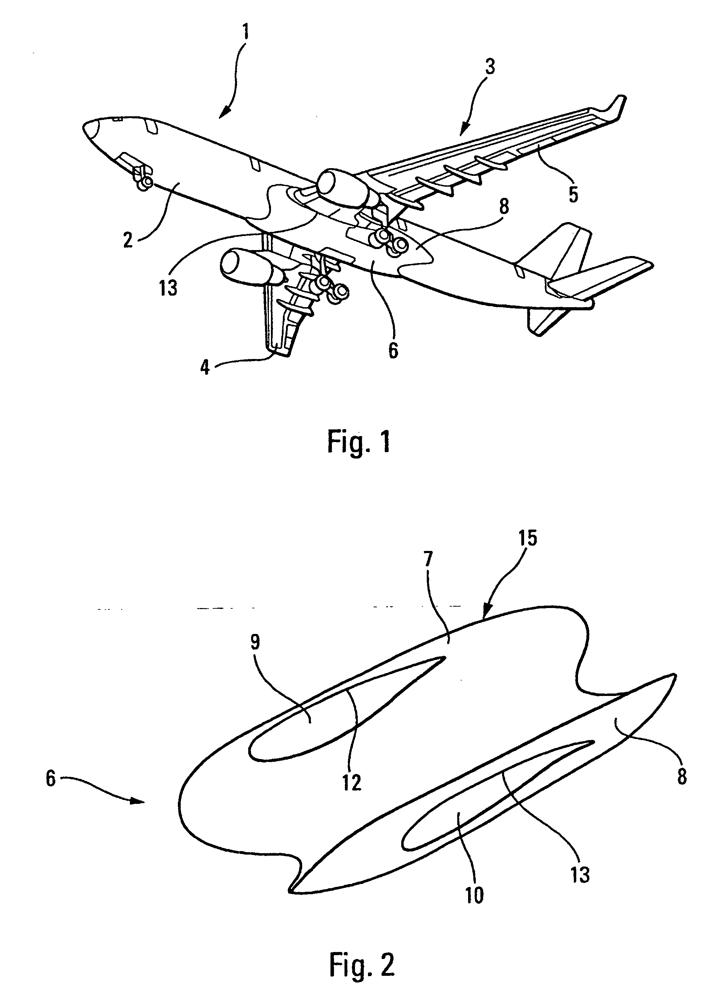

L'aéronef 1 représenté schématiquement sur la figure 1 comporte, de façon connue, un fuselage 2, une voilure fixe 3 comprenant deux ailes 4 et 5 opposées par rapport audit fuselage 2, un carénage ventral 6 en forme de berceau qui est fixé à la partie inférieure dudit fuselage 2, au croisement de ce dernier avec ladite voilure 3, et qui fait saillie vers le bas par rapport au ventre dudit aéronef. Un tel berceau possède deux rebords longitudinaux 7 et 8 remontant latéralement le long dudit fuselage 2 (voir également la figure 2), lesdits rebords 7 et 8 étant pourvus, chacun, d'une ouverture 9 ou 10 pour le passage de l'aile 4 ou 5 correspondante.

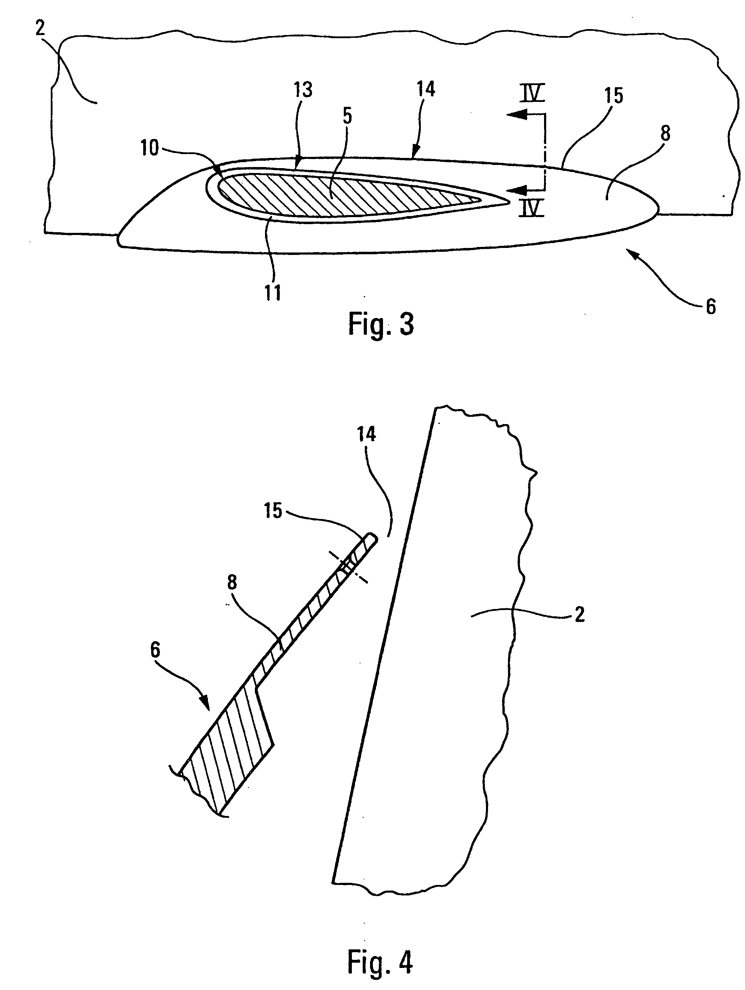

Après fixation du carénage ventral 6 sur le fuselage 2, il existe :
- une fente périphérique 11 autour de chaque aile 4 ou 5 entre celle-ci et la périphérie 12 ou 13 de l'ouverture 9 ou 10, comme cela est illustré sur la figure 3 ; et
- une fente périphérique 14 autour dudit carénage ventral 6 entre la périphérie 15 de celui-ci et le fuselage 2, comme cela est illustré sur la figure 4.

Selon la présente invention, un joint allongé 16, formant éventuellement une boucle fermée, par exemple réalisé en élastomère armé est fixé, à la périphérie 15 du carénage ventral 6, pour obturer ladite fente périphériques 14.

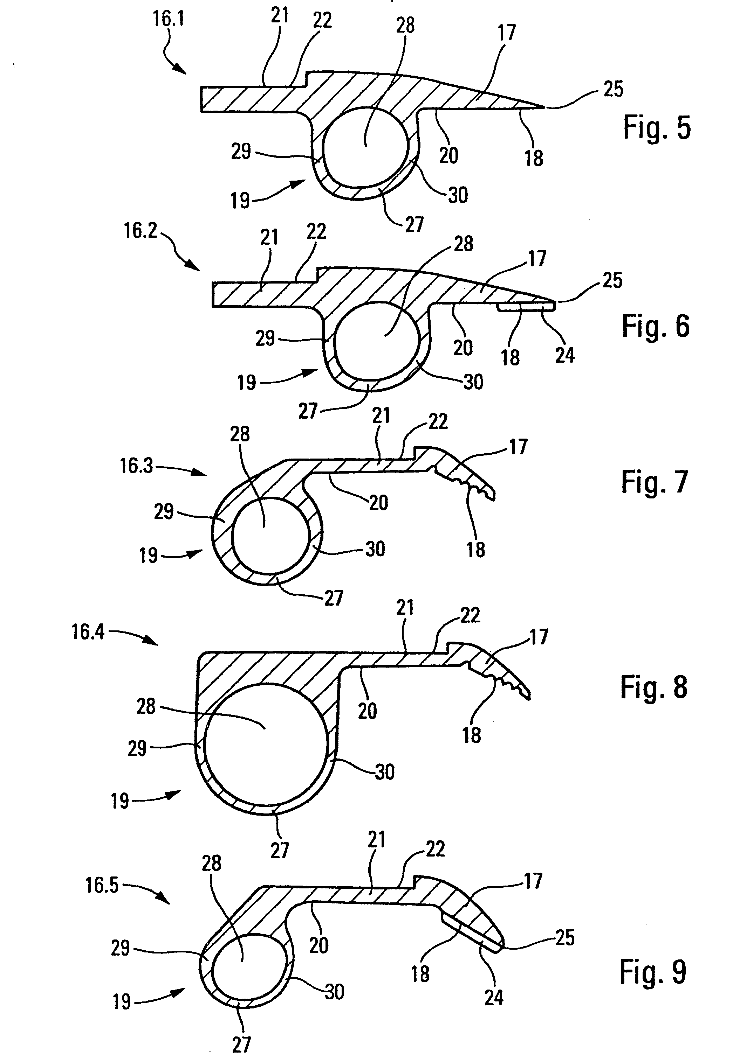

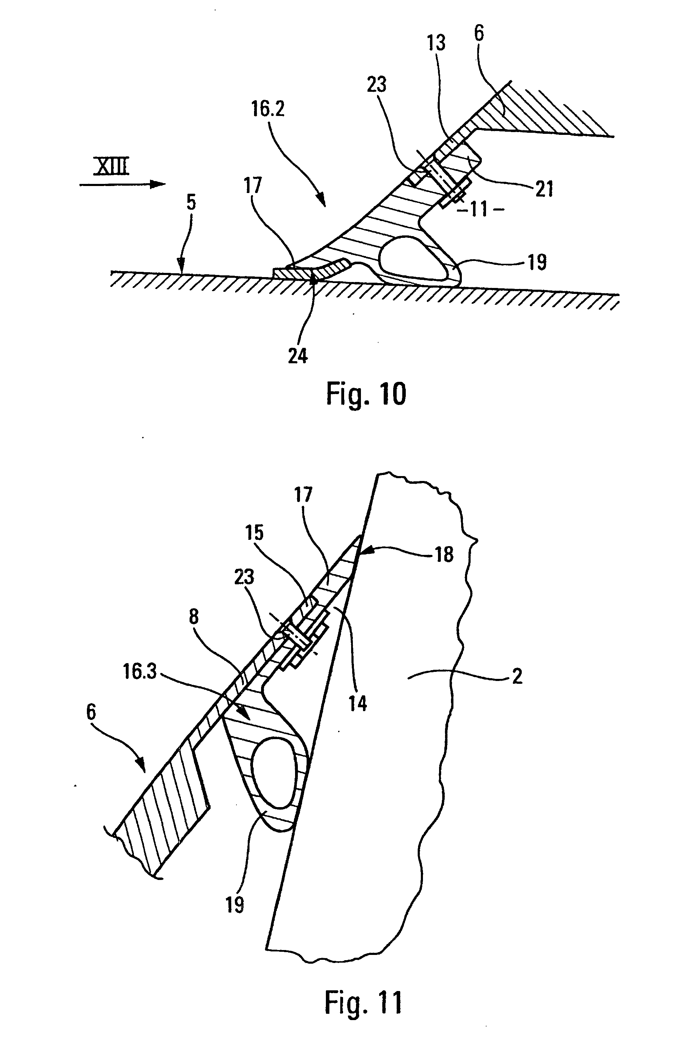

Sur les figures 5 à 9, on a illustré en section cinq exemples de réalisation 16.1 à 16.5 du joint 16. Comme on peut le voir sur ces figures, quel que soit le mode de réalisation 16.1 à 16.5, le joint 16 comporte :
- une lèvre élastique longitudinale d'extrémité 17, formant l'un des bords longitudinaux dudit joint, ladite lèvre 17 étant apte, comme cela est illustré par les figures 10 et 11, à s'appliquer par la face interne 18 de son extrémité libre contre la voilure 3, 4, 5 ou contre le fuselage 2 ;
- un bourrelet radialement élastique 19, porté par la face interne 20 du joint 16 en retrait par rapport à la lèvre d'extrémité 17 et également apte à s'appliquer contre le fuselage 2 ou la voilure 3 en s'aplatissant et en offrant une large surface d'appui (voir les figures 10 et 11) et donc une excellente étanchéité ; et
- une partie longitudinale plate 21 destinée à la fixation du joint 16 sur le carénage ventral 6.

On remarquera que, dans les exemples de réalisation 16.1 et 16.2, ladite partie de fixation 21 forme le bord dudit joint opposé à la lèvre 17, le bourrelet 19 étant alors en position intermédiaire entre celle-ci et ladite partie de fixation 21. En revanche, dans les exemples de réalisation 16.3, 16.4 et 16.5, ladite partie de fixation 21 est disposée en position intermédiaire entre la lèvre 17 et le bourrelet 19.

De plus, sur sa face externe, ladite partie de fixation 21 comporte un évidement longitudinal en forme de lame 22, apte à servir de logement au bord périphérique correspondant 12, 13 ou 15 du carénage ventral 6. La fixation du joint 16 sur le carénage ventral 6 est obtenue par des vis ou analogues 23 traversant ledit bord périphérique 12, 13, 15 et ladite partie de fixation 21 (voir les figures 10 et 11).

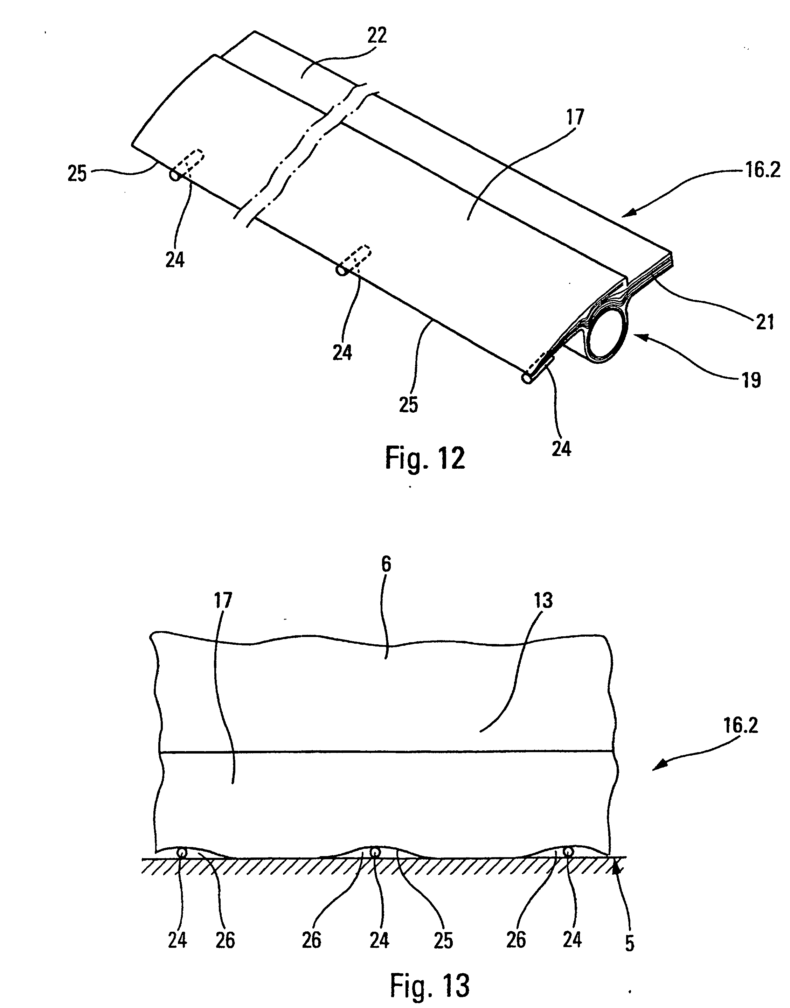

Dans les exemples de réalisation 16.2 et 16.5 représentés sur les figures 6 et 9, la face interne 18 de la lèvre 17 comporte des bossages de butée espacés 24, destinés à être positionnés en regard d'au moins une partie du fuselage 2 ou de la voilure 3. De tels bossages 24 maintiennent localement écarté du fuselage 2 ou de la voilure 3 le bord d'extrémité 25 de la lèvre 17 pour ménager des espaces 26, organisant une fuite contrôlée et calibrée de l'air passant à travers les fentes 11 ou 14, en cas d'éventuel défaut d'étanchéité du bourrelet 19 (voir la figure 13).

Le coefficient de pression sur certaines parties de l'extrados de la voilure 3 pouvant prendre des valeurs fortement négatives, c'est du côté de ces parties qu'il est avantageux d'appliquer un tel joint d'étanchéité. Ainsi, lorsque la pression de l'air entre l'intrados et l'extrados de la voilure 3 atteint une valeur suffisamment élevée pour décoller le bourrelet 19, de l'air passe entre celui-ci et le fuselage et/ou la voilure, respectivement, et il en résulte une fuite qui est calibrée et contrôlée par les espaces 26. La hauteur des bossages de butée 24, leur nombre et leur répartition le long de l'extrémité libre 25 sont déterminés pour que le débit de la fuite d'air à travers les espaces 26 engendre peu de traînée parasite, tout en assurant un faible niveau de vibrations pour la lèvre 17.

Pour assurer une bonne présentation du bourrelet 19 en regard du fuselage 2 ou de la voilure 3 lors de la pose dudit bourrelet dans lesdites fentes 11 et 14, il est avantageux que ledit bourrelet présente une raideur relativement importante au voisinage de la face interne 20 du joint 16. En revanche, pour assurer une bonne étanchéité, la partie libre 27 dudit bourrelet destiné à venir s'appliquer contre le fuselage 2 ou la voilure 3 est relativement souple.

Pour pouvoir régler ces exigences de différence de raideur, il est préférable que le bourrelet 19, qui cependant pourrait être plein, soit tubulaire en présentant un passage interne 28.

Ainsi, en jouant sur la forme et/ou l'excentrement dudit passage interne 28, il est aisé de faire varier localement l'épaisseur de la paroi du bourrelet tubulaire 19, et donc la raideur de ce dernier, comme cela est illustré sur les figures 5 à 9.

Par exemple, pour améliorer encore la présentation du bourrelet 19 à la pose et l'étanchéité procurée par celui-ci, les deux parties latérales 29 et 30 dudit bourrelet 19, joignant respectivement la face interne 20 du joint 16 à la partie libre 27 du bourrelet, présentent des raideurs différentes.

On comprendra aisément que le joint 16 peut présenter soit la forme d'une bande (profilé), soit celle d'une boucle fermée.

## Revendications

1. Aéronef (1) comportant :
- un fuselage (2) et une voilure fixe (3) comprenant deux ailes (4, 5) opposées par rapport audit fuselage (2) ;
- un carénage ventral (6) en forme de berceau, fixé avec jeu à la partie inférieure dudit fuselage (2), au croisement de ce dernier avec ladite voilure (3), de sorte qu'est formée une fente périphérique (14) autour dudit carénage ventral (6), entre celui-ci et ledit fuselage (2) ; et
- un joint (16) allongé, fixé à la périphérie dudit carénage ventral pour obturer ladite fente (14), ledit joint comportant une lèvre élastique longitudinale d'extrémité (17) qui s'applique, par la face interne (18) de son extrémité libre contre ledit fuselage (2),
**caractérisé en ce que** ledit joint (16) comporte un organe d'étanchéité longitudinal supplémentaire formé par un bourrelet radialement élastique (19), porté par la face interne (20) dudit joint (16) en retrait par rapport à ladite lèvre d'extrémité (1 7) et qui s'applique également contre ledit fuselage (2).

2. Aéronef selon la revendication 1,
**caractérisé en ce que** ladite face interne (18) de l'extrémité libre de ladite lèvre d'extrémité (17) comporte, au moins sur une partie dudit joint, au moins un bossage de butée (24), qui maintient ladite lèvre d'extrémité (17) localement écartée du fuselage (2) pour ménager une fuite contrôlée de l'air susceptible de passer à travers ladite fente (14), dans le cas d'un éventuel défaut d'étanchéité dudit bourrelet (19).

3. Aéronef selon l'une des revendications 1 ou 2,
**caractérisé en ce que** ledit bourrelet (19) est tubulaire.

4. Aéronef selon l'une des revendications 1 à 3,
**caractérisé en ce que** la raideur dudit bourrelet radialement élastique (19) est plus grande du côté de la face interne (20) dudit joint (16) que du côté de la partie libre (27) dudit bourrelet (19) qui s'applique contre ledit fuselage (2).

5. Aéronef selon la revendication 3,
**caractérisé en ce que** les deux parties latérales (29, 30) dudit bourrelet tubulaire (19), joignant respectivement la face interne (20) dudit joint (16) à la partie libre (27) dudit bourrelet qui s'applique contre ledit fuselage (2), présentent des raideurs différentes.

6. Aéronef selon l'une des revendications 4 ou 5,
**caractérisé en ce que** les variations de raideur dudit bourrelet radialement élastique (19) sont obtenues par des variations d'épaisseur de la paroi dudit bourrelet.

7. Aéronef selon l'une des revendications 1 à 6,
**caractérisé en ce que** ledit joint (16) comporte une partie longitudinale plate (21) fixée audit carénage ventral (6) et **en ce que** ladite partie longitudinale plate de fixation (21) est disposée à l'extrémité dudit joint (16) opposée à ladite lèvre élastique longitudinale d'extrémité (17), ledit bourrelet radialement élastique (19) se trouvant en position intermédiaire entre ladite lèvre élastique longitudinale d'extrémité et ladite partie longitudinale plate de fixation.

8. Aéronef selon l'une des revendications 1 à 6,
**caractérisé en ce que** ledit joint (16) comporte une partie longitudinale plate (21) fixée audit carénage ventral (6) et **en ce que** ladite partie longitudinale plate de fixation (21) est disposée en position intermédiaire entre ladite lèvre élastique longitudinale d'extrémité (17) et ledit bourrelet radialement élastique (19).

9. Aéronef selon l'une des revendications 7 ou 8
**caractérisé en ce que** ledit joint (16) comporte un évidement longitudinal en forme de lame (22) pratiqué dans la face externe de ladite partie longitudinale plate de fixation (21) et servant de logement au bord périphérique correspondant (15) dudit carénage ventral (6).

## Claims

1. Aircraft (1) comprising:
- a fuselage (2) and a fixed flying surface (3) comprising two wings (4, 5) opposite one another with respect to said fuselage (2);
- a cradle-shaped ventral fairing (6), fixed with play to the lower part of said fuselage (2), at the crossover of the latter with said flying surface (3) in such a way as to form a peripheral slot (14) around said ventral fairing (6), between the latter and said fuselage (2); and
- an elongate seal (16), fixed to the periphery of said ventral fairing so as to shut off said slot (14), said seal comprising a longitudinal elastic end lip (17), which is applied, via the inner face (18) of its free end, against said fuselage (2),
**characterized in that** said seal (16) comprises an additional longitudinal leaktightness member formed by a radially elastic bead (19), carried by the inner face (20) of said seal (16) set back with respect to said end lip (17) and which is also applied against said fuselage (2).

2. Aircraft according to Claim 1,
**characterized in that** said inner face (18) of the free end of said end lip (17) comprises, at least on a part of said seal, at least one abutment boss (24), which keeps said end lip (17) locally separated from the fuselage (2) so as to contrive a controlled leakage of air which can pass through said slot (14), in the case of a possible defect of leaktightness of said bead (19).

3. Aircraft according to either of Claims 1 or 2,
**characterized in that** said bead (19) is tubular.

4. Aircraft according to one of Claims 1 to 3,
**characterized in that** the stiffness of said radially elastic bead (19) is greater on the side of the inner face (20) of said seal (16) than on the side of the free part (27) of said seal (19) which is applied against said fuselage (2).

5. Aircraft according to Claim 3,
**characterized in that** the two lateral parts (29, 30) of said tubular bead (19), joining respectively the inner face (20) of said seal (16) to the free part (27) of said bead which is applied against said fuselage (2), exhibit different stiffnesses.

6. Aircraft according to either of Claims 4 or 5,
**characterized in that** the variations in stiffness of said radially elastic bead (19) are obtained through variations in thickness of the wall of said bead.

7. Aircraft according to one of Claims 1 to 6,
**characterized in that** said seal (16) comprises a flat longitudinal part (21) fixed to said ventral fairing (6) and **in that** said flat longitudinal fixing part (21) is disposed at the opposite end of said seal (16) to said longitudinal elastic end lip (17), said radially elastic bead (19) lying in an intermediate position between said longitudinal elastic end lip and said flat longitudinal fixing part.

8. Aircraft according to one of Claims 1 to 6,
**characterized in that** said seal (16) comprises a flat longitudinal part (21) fixed to said ventral fairing (6) and **in that** said flat longitudinal fixing part (21) is disposed in an intermediate position between said longitudinal elastic end lip (17) and said radially elastic bead (19).

9. Aircraft according to either of Claims 7 or 8,
**characterized in that** said seal (16) comprises a blade-shaped longitudinal recess (22) made in the outer face of said flat longitudinal fixing part (21) and serving as housing for the corresponding peripheral edge (15) of said ventral fairing (6).

## Patentansprüche

1. Flugzeug (1), aufweisend:
- einen Flugzeugrumpf (2) und ein starres Tragwerk (3), das zwei Flügel (4, 5) umfasst, die im Verhältnis zum Flugzeugrumpf (2) einander gegenüberliegen;
- eine Flügel-Rumpf-Verkleidung (6) in Form einer Wiege, die mit Spiel an dem unteren Teil des Flugzeugrumpfes (2), wo das Tragwerk (3) an den Flugzeugrumpf anschließt, befestigt ist, so dass sich zwischen der Flügel-Rumpf-Verkleidung (6) und dem Flugzeugrumpf (2) ein peripherer Spalt (14) um die Flügel-Rumpf-Verkleidung herum bildet; und
- eine langgestreckte Dichtung (16), die am Umfang der Flügel-Rumpf-Verkleidung befestigt ist, um den Spalt (14) abzudichten, wobei die Dichtung eine längliche, elastische End-Lippe (17) aufweist, die mit der Innenseite (18) ihres freien Endes am Flugzeugrumpf (2) anliegt,
**dadurch gekennzeichnet, dass** die Dichtung (16) ein zusätzliches längliches Dichtelement aufweist, das von einer radial elastischen Wulst (19) gebildet wird, von der Innenseite (20) der Dichtung (16) getragen wird, gegenüber der End-Lippe (17) rückspringend angeordnet ist, und das ebenfalls am Flugzeugrumpf (2) anliegt.

2. Flugzeug gemäß Anspruch 1,
**dadurch gekennzeichnet, dass** die Innenseite (18) des freien Endes der End-Lippe (17) zumindest an einem Teil der Dichtung mindestens einen Anschlagkörper (24) aufweist, der die End-Lippe (17) örtlich vom Flugzeugrumpf (2) entfernt hält, um ein gesteuertes Entweichen der Luft herbeizuführen, die im Falle einer eventuellen Undichtigkeit der Wulst (19) durch den Spalt (14) strömen kann.

3. Flugzeug gemäß einem der Ansprüche 1 oder 2,
**dadurch gekennzeichnet, dass** die Wulst (19) rohrförmig ist.

4. Flugzeug gemäß einem der Ansprüche 1 bis 3,
**dadurch gekennzeichnet, dass** die Steifigkeit der radial elastischen Wulst (19) an der Innenfläche (20) der Dichtung (16) größer ist als an dem freien Teil (27) der Wulst (19), der am Flugzeugrumpf (2) anliegt.

5. Flugzeug gemäß Anspruch 3,
**dadurch gekennzeichnet, dass** die beiden Seitenteile (29, 30) der rohrförmigen Wulst (19), die jeweils die Innenseite der Dichtung (16) an den freien Teil (27) der Wulst anfügen, der am Flugzeugrumpf (2) anliegt, unterschiedliche Steifigkeiten aufweisen.

6. Flugzeug gemäß einem der Ansprüche 4 oder 5,
**dadurch gekennzeichnet, dass** die Variationen der Steifigkeit der radial elastischen Wulst (19) durch unterschiedlich dicke Wände der Wulst erreicht werden.

7. Flugzeug gemäß einem der Ansprüche 1 bis 6,
**dadurch gekennzeichnet, dass** die Dichtung (16) einen flachen, länglichen Teil (21) aufweist, der an der Flügel-Rumpf-Verkleidung (6) befestigt ist, und dass der flache, längliche Befestigungsteil (21) an dem Ende der Dichtung (16) angeordnet ist, das der länglichen, elastischen End-Lippe (17) gegenüberliegt, wobei sich die radial elastische Wulst (19) in einer intermediären Position zwischen der länglichen, elastischen End-Lippe und dem flachen, länglichen Befestigungsteil befindet.

8. Flugzeug gemäß einem der Ansprüche 1 bis 6,
**dadurch gekennzeichnet, dass** die Dichtung (16) einen flachen, länglichen Teil (21) aufweist, der an der Flügel-Rumpf-Verkleidung (6) befestigt ist, und dass sich der flache, längliche Befestigungsteil (21) in einer intermediären Position zwischen der länglichen, elastischen End-Lippe (17) und der radial elastischen Wulst (19) befindet.

9. Flugzeug gemäß einem der Ansprüche 7 oder 8,
**dadurch gekennzeichnet, dass** die Dichtung (16) eine längliche Aussparung in Form einer Klinge (22) aufweist, die in die Außenseite des flachen, länglichen Befestigungsteils (21) eingelassen ist und zur Aufnahme des entsprechenden Außenrands (15) der Flügel-Rumpf-Verkleidung (6) dient.
